# EUROPÄISCHE PATENTSCHRIFT

(11) **EP 4 647 413 B1**
(45) Veröffentlichungstag und Bekanntmachung des Hinweises auf die Patenterteilung: **25.11.2026**
(21) Anmeldenummer: 24174318.6
(22) Anmeldetag: 06.05.2024
(51) Int. Cl.: C04B 38/10, C04B 35/14, C04B 35/66, C04B 35/626

(54) **HOCHWÄRMEDÄMMENDER SILIKA-FEUERLEICHTSTEIN UND DESSEN HERSTELLUNGSVERFAHREN**
HIGHLY THERMALLY INSULATING LIGHTWEIGHT SILICA REFRACTORY BRICK AND ITS PRODUCTION PROCESS
BRIQUE RÉFRACTAIRE DE SILICE LÉGÈRE À HAUTE ISOLATION THERMIQUE ET SON PROCÉDÉ DE FABRICATION

(43) Veröffentlichungstag der Anmeldung: 12.11.2025
(73) Patentinhaber: Refractory Intellectual Property GmbH & Co. KG, 1100 Wien (AT)
(72) Erfinder: Brunk, Fred, 45525 Hattingen (DE)
(74) Vertreter: Eibel, Anna

(56) Entgegenhaltungen:
- CN-B- 111 302 830

## Beschreibung

Die vorliegende Erfindung betrifft einen Silika-Feuerleichtstein, ein Verfahren zu dessen Herstellung, sowie dessen Verwendung.

Feuerleichtsteine sind geformte feuerfeste Erzeugnisse mit einer Gesamtporosität von größer 45 % und einer Anwendungstemperatur von mindestens 800 °C (G. Routschka u. H. Wuthnow, Praxishandbuch Feuerfeste Werkstoffe, Anhang, ISBN 978-3-8027-3168-6). Eine entsprechende Klassifizierung erfolgt auf Grundlage der Bestimmung der bleibenden Längenänderung nach Temperatureinwirkung sowie einer maximalen Rohdichte (ASTM C155-97 (2022), ISO 2245:2006 / DIN EN 1094-2: 1998).

Feuerleichtsteine weisen geringe Wärmeleitfähigkeitswerte und daher hohe Wärmedämmeigenschaften auf, was sie besonders geeignet für Isolationsanwendungen macht. Zur Angabe von Wärmeleitfähigkeitswerten ist es erforderlich, das verwendete Prüfverfahren anzuführen, da sich die Ergebnisse der beiden für Feuerleichtsteine relevanten genormten Prüfmethoden - das sog. Kalorimeter- (ASTM C182 (2013)) und das sog. Heißdrahtverfahren (Kreuzdrahtmethode EN ISO 8894-1:2010) - deutlich voneinander unterscheiden. Das Heißdrahtverfahren zeigt hierbei signifikant höhere Werte (Hagemann, L; Peters, E.: Thermal Conductivity - Comparison of Methods: ASTM-Method - Hot Wire Method and its Variations. Interceram 2 (1982), S. 131 - 135).

Feuerleichtsteine, welche zu mehr als 90 Gew.-% aus Silika (Siliziumdioxid, SiO₂) bestehen, werden "Silika-Feuerleichtsteine" genannt. Die Rohdichten konventioneller Silika-Feuerleichtsteine liegen im Bereich von ca. 0,40 - 1,25 g/cm³, wobei die dichteren, weniger porösen Steine eine höhere Wärmeleitfähigkeit aufweisen.

Anwendung finden Silika-Feuerleichtsteine unter anderem in der Glasindustrie. Zum Beispiel werden die heißseitig aus dichten, hochfeuerfesten Silika-Steinen bestehenden Gewölbe von Kalknatron-Glasschmelzwannen, in denen Temperaturen von bis zu 1600 °C im Betrieb herrschen, zur Senkung von Wärmeverlusten kaltseitig und in der Regel mehrlagig mit Silika-Feuerleichtsteinen zugestellt, wobei die einzelnen Lagen aus Steinen mit unterschiedlichen Raumgewichten (d.h. Rohdichten) bzw. Gesamtporositäten bestehen können. Besondere Beachtung gilt hierbei insbesondere kaltseitig den obersten ein bis zwei Steinlagen, bei welchen aus Gründen der Energieeffizienz ein möglichst hohes Wärmedämmvermögen (und damit eine möglichst niedrige Wärmeleitfähigkeit) im vorherrschenden Temperaturbereich von ca. 200 - 900 °C optimal ist.

Dichte Silika-Steine unterliegen im Einsatz insbesondere im Fugenbereich einem korrosiven Verschleiß, welcher häufig zur Ausbildung von korrosionsbedingten Kanälen (sogenannte "Rattenlöcher" oder "Durchbläser") führt, infolgedessen auch die (dahinterliegenden) Silika-Feuerleichtsteine durch eine Reaktion mit aus dem Ofenraum zugeführten Fremdbestandteilen schmelzen können. Obwohl sie höhere Wärmeleitfähigkeitswerte als z.B. Schamotte-Feuerleichtsteinen mit vergleichbarem Raumgewicht aufweisen, werden konventionelle Silika-Feuerleichtsteine regelmäßig deshalb verwendet, weil zum einen die im Prozess entstehenden Schmelzflüsse die dichten Silika-Steine signifikant weniger korrodieren und zum anderen diese beim Abtropfen in die Glasschmelze aufgrund der ähnlichen chemischen Zusammensetzung ein geringeres Potential für die Ausbildung von Glasfehlern im Endprodukt aufweisen.

Konventionelle Silika-Feuerleichtsteine werden überwiegend maschinell gepresst, wobei zur Erreichung der gewünschten hohen Porosität leichte, in der Natur vorkommende und gegebenenfalls thermisch behandelte Rohstoffe und/oder Ausbrennstoffe verwendet werden. Der Brand der Steine erfolgt dabei bei Temperaturen oberhalb von 1200 °C (DE 10 2012 219 236 B4).

Ein weiteres, kommerziell seltener angewendetes Herstellungsverfahren ist das sogenannte Schaumverfahren.

Die DE 33 26 271 beschreibt diesbezüglich ein Verfahren zur Herstellung von Silika-Leichtsteinen auf der Basis von feinkörnigem amorphem Quarzglas und/oder Quarzgut (SiO₂) als Rohstoff, wonach ein Gemisch aus einem Schlicker und einem getrennt hergestellten Schaum geformt, getrocknet und bei Temperaturen von 1000 °C bis 1100 °C oder von 1100 °C bis 1500 °C gebrannt wird. Durch geeignete Auswahl des Verhältnisses von Schaum und Schlicker wird dabei die gewünschte Porosität bzw. das gewünschte Raumgewicht eingestellt. Bei der Herstellung werden als Stellmittel für den Schlicker Magnesiummontmorillonit in Form einer Paste und als Verfestigungsmittel in Wasser dispergierter Magnesiumoxidkauster zugesetzt.

Eine Weiterführung dieses Verfahrens wird in der GB 2 213 814 B offenbart, wonach anteilig preiswerte, ultrafeine, amorphe SiO₂-Flugstäube mit einer Primärkorngröße ≤ 0,3 µm verwendet werden, welche etwa als Nebenprodukt bei der Herstellung von Ferrosilizium oder bei der Reaktion von Zirkoniumsilikat zu Zirkoniumdioxid anfallen. Optional kann ein Brand bei Temperaturen von mindestens 800 °C erfolgen. Wärmeleitfähigkeitswerte von gebrannten, nach diesem Verfahren hergestellten Silika-Leichtsteinen werden in der GB 2 213 814 B jedoch nicht angegeben. Die in der in der GB 2 213 814 B angeführten Silikastäube bestehen aus nicht porösen, kugelförmigen Partikeln.

Aus der DE 10 2015 202 277 B3 ist ein mehrstufiges Schaumverfahren für die Herstellung von keramischen Schäumen bekannt, wobei eine Schlicker-Vormischung, welche aus mindestens einem partikelförmigen Feststoff (mittlerer Teilchendurchmesser d50 0,1 - 5,0 µm und/oder Oberfläche 2 - 20 m²/g) mit der Eignung zur Abbindung besteht, mechanisch unter Zugabe mindestens eines hydraulischen Bindemittels aufgeschäumt wird. Der getrocknete, einem Formgebungsverfahren unterzogene Schlicker wird anschließend bei Temperaturen im Bereich von 1400 °C bis 2000 °C gebrannt. Für die Schlicker-Vormischung wird Siliziumdioxid als partikelförmiger Feststoff als Gemisch mit anderen partikelförmigen Oxiden angeführt. Die erfindungsgemäßen keramischen, hochfeuerfesten Schäume sind dadurch charakterisiert, dass die Poren eine hochhomogene monomodale Porengrößenverteilung im Bereich von 20 - 200 µm aufweisen.

Die US 9,506,244 B2 offenbart einen festen Schaum, welcher durch Schäumen eines partikelförmigen mineralischen Ausgangsstoffes mit Poren im Submikrometerbereich hergestellt wird. Dabei wird eine einzige Art von Silika-Partikeln als Ausgangsstoff verwendet, und der Schaum wird nicht gebrannt.

Die Wärmeleitfähigkeit von Feuerleichtsteinen ist neben der Gesamtporosität auch von der Porengröße abhängig, welche sowohl bei gepressten als auch bei geschäumten konventionellen Silika-Feuerleichtsteinen im zweistelligen µm- bis einstelligen mm-Bereich liegen. Unabhängig vom Herstellungsverfahren zeigen konventionelle Silika-Feuerleichtsteine mit geringer Rohdichte bzw. hoher Gesamtporosität daher bekanntermaßen ein Minimum in der Wärmeleitfähigkeit, welches mit zunehmender Temperatur bei geringerer Porosität (also höherer Rohdichte) liegt. Dies folgt aus der Tatsache, dass der Strahlungswärmetransport in den Poren im Vergleich zum Leitungswärmetransport stärker in Abhängigkeit von der Temperatur zunimmt (W. Schulle, Feuerfeste Werkstoffe, Kap. 2.4.2 und 3.4.3.3, ISBN 3-342-00306-5). Daraus folgt, dass für eine bestimmte Anwendungstemperatur bzw. ein zu dämmendes Temperaturgefälle bei konventionellen Silika-Feuerleichtsteinen eine optimale Rohdichte existiert und eine alleinige Reduzierung der Rohdichte keine weitere Verbesserung im Wärmedämmvermögen bewirkt. Um Energieverluste bei Hochtemperaturprozessen, wie z.B. bei der Glasherstellung zu minimieren, ist es allerdings gewünscht, Feuerleichtsteine mit weiter verbesserten Wärmedämmeigenschaften bereitzustellen.

Die Aufgabe der vorliegenden Erfindung war es daher, einen Silika-Feuerleichtstein bereitzustellen, der sich für den Einsatz in der Glasindustrie eignet, und im Vergleich zu konventionellen Silika-Feuerleichtsteinen niedrigere Werte für die Wärmeleitfähigkeit aufweist, insbesondere im Temperaturbereich von 200 °C bis 900 °C.

Diese Aufgabe wird durch Anspruch 1 gelöst, wonach ein gebrannter Silika-Feuerleichtstein mit einer Rohdichte von maximal 0,65 g/cm³ bereitgestellt wird, wobei der gebrannte Silika-Feuerleichtstein eine mikroporöse Struktur aufweist, die mikroporöse Struktur umfassend ein Gerüst aus miteinander verbundenen, nicht nanoporösen Partikeln einer Silika-Grundkomponente, und Poren mit einer mittleren Porengröße von mindestens 1 µm, wobei nanoporöse Silika-Partikel mit einer mittleren Porengröße im Bereich von 1 nm bis 100 nm in das Gerüst der miteinander verbundenen, nicht nanoporösen Partikel der Silika-Grundkomponente eingebettet sind.

Der Feuerleichtstein gemäß der vorliegenden Erfindung ist ein "Silika-Feuerleichtstein". Silika-Feuerleichtsteine weisen einen Gesamtgehalt an Silika (SiO₂) von mindestens 90 Gew.% auf. Für einige Anwendungen, insbesondere in der Glasindustrie, ist eine besonders hohe chemische Reinheit des Silika-Feuerleichtsteins gewünscht. In bevorzugten Ausführungsformen beträgt der Gesamtgehalt an Silika im Feuerleichtstein daher mindestens 93 Gew.-%, besonders bevorzugt mindestens 95 Gew.-%.

Der Feuerleichtstein gemäß der vorliegenden Erfindung ist ein gebrannter Silika-Feuerleichtstein. Dies bedeutet, dass der Stein einer Temperaturbehandlung ("Brand") bei einer Temperatur von mindestens 400 °C unterzogen wurde, wodurch der erfindungsgemäße Feuerleichtstein eine ausreichende Festigkeit für den Einsatz als thermisches Isolationsmaterial in Hochtemperaturprozessen, beispielsweise in der Glasindustrie, wie z.B. in einem Glasschmelzwannengewölbe, aufweist.

Erfindungsgemäß weist der gebrannte Silika-Feuerleichtstein eine Rohdichte von maximal 0,65 g/cm³ auf. Für die vorliegende Erfindung wird die Rohdichte gemäß DIN EN 1094-4:1995 bestimmt. Eine Rohdichte von maximal 0,65 g/cm³ bewirkt, dass der erfindungsgemäße Silika-Feuerleichtstein eine hohe Gesamtporosität aufweist, was vorteilhaft für eine Reduktion der Wärmeleitfähigkeit des Silika-Feuerleichtsteins ist.

Der erfindungsgemäße gebrannte Silika-Feuerleichtstein weist eine mikroporöse Struktur auf, wobei die mikroporöse Struktur Folgendes umfasst:
- ein Gerüst aus miteinander verbundenen, nicht nanoporösen Partikeln einer Silika-Grundkomponente, und
- Poren mit einer mittleren Porengröße von mindestens 1 µm.

Bevorzugt besteht die mikroporöse Struktur aus einem Gerüst aus miteinander verbundenen, nicht nanoporösen Partikeln einer Silika-Grundkomponente, und aus Poren mit einer mittleren Porengröße von mindestens 1 µm.

Unter dem Begriff "Silika-Grundkomponente" ist ein Silika-basiertes Material mit einem Gehalt an Silika von bevorzugt mindestens 90 Gew.-%, besonders bevorzugt mindestens 93 Gew.-% zu verstehen. Das Gerüst aus miteinander verbunden Partikeln der Silika-Grundkomponente kann bei der Herstellung des Feuerleichtsteins aus Rohstoffpartikeln der Silika-Grundkomponente erhalten werden. Beim Brand des erfindungsgemäßen Feuerleichtsteins versintern diese Rohstoffpartikel, sodass ein Gerüst aus miteinander verbunden Partikeln der Silika-Grundkomponente gebildet wird. Die Rohstoffpartikel der Silika-Grundkomponente können beispielsweise ausgewählt sein aus der Gruppe bestehend aus Quarz, Tridymit, Cristobalit, amorphem SiO₂, und Mischungen davon.

Die miteinander verbundenen Partikel der Silika-Grundkomponente sind gemäß der vorliegenden Erfindung nicht nanoporös. Im Sinne der vorliegenden Erfindung bedeutet der Begriff "nicht nanoporös", dass keine, oder eine vernachlässigbare Anzahl, an Poren mit einer Porengröße zwischen 1 und 1000 nm vorhanden sind.

Dadurch dass die Partikel der Silika-Grundkomponente nicht nanoporös sind, wird sichergestellt, dass der Feuerleichtstein trotz der Anwesenheit von nanoporösen Silika-Partikeln eine ausreichende Festigkeit aufweist. Dies ermöglicht eine mechanische Nachbearbeitung des gebrannten Silika-Feuerleichtsteins, z.B. durch Bohren, Schneiden, Schleifen oder Fräsen, ohne dass es zu einem Bruch des Steins kommt.

Besonders hohe Festigkeiten wurden erzielt, wenn die Partikel der Silika-Grundkomponente eine spezifische Oberfläche von unter 50 m²/g, gemessen mittels BET-Verfahren nach DIN ISO 9277:2014, aufweisen. Besonders bevorzugt weisen die Partikel der Silika-Grundkomponente eine spezifische Oberfläche von unter 40 m²/g, bevorzugt unter 30 m²/g, bevorzugt unter 20 m²/g, gemessen mittels BET-Verfahren nach DIN ISO 9277:2014, auf.

Gemäß der vorliegenden Erfindung weisen die Poren der mikroporösen Struktur eine mittlere Porengröße von mindestens 1 µm auf. Bevorzugt liegt die mittlere Porengröße im Bereich von 1 µm bis 1 mm. Besonders bevorzugt liegt die mittlere Porengröße im Bereich von 20 µm bis 200 µm.

Im Rahmen der vorliegenden Erfindung wird die mittlere Porengröße der mikroporösen Struktur mittels Rasterelektronenmikroskopie (REM) bestimmt. Diese Porengrößenbestimmung kann bei einer Anregungsspannung von 10 - 15 kV, einem Probenstrom von 1 nA und unter Verwendung eines Sekundärelektronen-Detektors durchgeführt werden. Beispielsweise kann als Rasterelektronenmikroskop das Gerät JEOL JSM-7900F verwendet werden.

Gemäß der vorliegenden Erfindung sind nanoporöse Silika-Partikel in das Gerüst der mikroporösen Struktur eingebettet. Dies bedeutet, dass die nanoporösen Silika-Partikel im Gerüst der miteinander verbundenen, nicht nanoporösen Partikel der Silika-Grundkomponente vorliegen und mit diesen verbunden sind.

Unter nanoporösen Silika-Partikeln sind Partikel mit einem Gehalt an Silika von bevorzugt mindestens 90 Gew.-%, besonders bevorzugt mindestens 93 Gew.-%, und mit einer Porengröße im Nanometerbereich (1 nm bis 1000 nm) zu verstehen.

Die Einbettung der nanoporösen Silika-Partikel in das Gerüst der mikroporösen Struktur kann erreicht werden, indem bei der Herstellung des Feuerleichtsteins entsprechende Partikel eines nanoporösen Silika-Rohstoffs zugegeben werden. Beim Brand des erfindungsgemäßen Feuerleichtsteins versintern diese nanoporösen Silika-Rohstoffpartikel mit den Rohstoffpartikeln der Silika-Grundkomponente, sodass ein Gerüst aus miteinander verbunden Partikeln der Silika-Grundkomponente mit darin eingebetteten nanoporösen Silika-Partikeln gebildet wird.

Bevorzugt sind die nanoporösen Silika-Partikel homogen in das Gerüst der mikroporösen Struktur eingebettet, d.h. die nanoporösen Silika-Partikel sind bevorzugt homogen im gebrannten Feuerleichtstein verteilt.

Erfindungsgemäß weisen die nanoporösen Silika-Partikel eine mittlere Porengröße von 1 bis 100 nm auf. Die mittlere Porengröße der nanoporösen Silika-Partikel kann mittels Rasterelektronenmikroskopie (REM) bestimmt werden. Diese Porengrößenbestimmung kann bei einer Anregungsspannung von 10 - 15 kV, einem Probenstrom von 1 nA und unter Verwendung eines Sekundärelektronen-Detektors durchgeführt werden. Beispielsweise kann als Rasterelektronenmikroskop das Gerät JEOL JSM-7900F verwendet werden.

Es wurde überraschenderweise gefunden, dass durch die Anwesenheit von nanoporösen Silika-Partikeln mit einer mittleren Porengröße von 1 bis 100 nm ein Feuerleichtstein mit einer deutlich niedrigeren Wärmeleitfähigkeit und daher verbesserten Wärmedämmeigenschaften im Vergleich zu konventionellen Silika-Feuerleichtsteinen erhalten wird.

Dieser Effekt könnte darauf zurückzuführen sein, dass bei Porengrößen unterhalb der mittleren freien Weglänge der Luftmoleküle, welche bei Standardbedingungen bei < 100 nm liegt, die Wärmeleitfähigkeit des Porengases deutlich gesenkt wird. Dadurch werden die Wärmedämmeigenschaften im Vergleich zu konventionellen Feuerleichtsteinen, welche ausschließlich Poren mit einem mittleren Porendurchmesser im µm-Bereich aufweisen, signifikant verbessert.

Bevorzugt liegt die mittlere Porengröße der nanoporösen Silika-Partikel im Bereich von 1 nm bis 80 nm, noch mehr bevorzugt im Bereich von 1 nm bis 70 nm, noch mehr bevorzugt im Bereich von 1 nm bis 60 nm und noch mehr bevorzugt im Bereich von 1 nm bis 50 nm.

Besonders gute Wärmedämmeigenschaften wurden gefunden, wenn die nanoporösen Silika-Partikel eine spezifische Oberfläche von mindestens 50 m²/g, bevorzugt mindestens 100 m²/g, besonders bevorzugt mindestens 500 m²/g, gemessen mittels BET-Verfahren nach DIN ISO 9277:2014, aufweisen. Es wurde dementsprechend gefunden, dass die Wärmeleitfähigkeit mit steigender BET-Oberfläche der nanoporösen Silika-Partikel sinkt. Gemäß der vorliegenden Erfindung können die nanoporösen Silika-Partikel eine BET-Oberfläche von bis zu 1800 m²/g aufweisen.

Bevorzugt liegt der Volumen-Anteil der nanoporösen Silika-Partikel bezogen auf das Gesamtvolumen der im Feuerleichtstein vorhandenen Silika-Partikel (Summe der Volumina der nicht nanoporösen Partikel der Silika-Grundkomponente und der nanoporösen Silika-Partikel) im Bereich von 10 bis 65 Vol.-%, bevorzugt im Bereich von 15 bis 55 Vol.-%.

Bevorzugt umfassen die nanoporösen Silika-Partikel Silika-Aerogel, Silika-Xerogel, Silika-Kryogel und/oder Mischungen davon. Besonders bevorzugt bestehen die nanoporösen Silika-Partikel aus Silika-Aerogel, Silika-Xerogel, Silika-Kryogel und/oder Mischungen davon.

Die Begriffe "Silika-Aerogel" (SiO₂-Aerogel), "Silika-Xerogel" (SiO₂-Xerogel) und "Silika-Kryogel" (SiO₂-Kryogel) beziehen sich hierin auf ein festes Gel, welches aus hochporösem Silika (SiO₂) besteht und dessen dispergierte Phase gasförmig ist. Aerogele, Xerogele und Kryogele unterscheiden sich voneinander in der Art der Trocknungsmethode bei der Herstellung. Aerogele werden hierbei durch überkritische Trocknung des Gels, Xerogele durch konvektive überkritische Trocknung und Kryogele durch Gefriertrocknung erzeugt.

Es wurde gefunden, dass Feuerleichtsteine mit besonders vorteilhaften Eigenschaften (also möglichst niedriger Wärmeleitfähigkeit) erhalten werden, wenn die nanoporösen Silika-Partikel aus einem hydrophilen Silika-Aerogel bestehen. Der Einsatz von hydrophilem Silika-Aerogel ist besonders dann vorteilhaft, wenn der erfindungsgemäße Feuerleichtstein mittels eines Schaumverfahrens hergestellt wird, bei welchem ein polares Dispersionsmedium verwendet wird. In diesem Fall werden eine besonders stabile Dispersion und ein besonders stabiler Schaum erhalten.

Silika-Aerogele sind üblicherweise von sich aus hydrophil. Im industriellen Maßstab wird jedoch auch hydrophobes Silika-Aerogel hergestellt. Aus hydrophobem Silika-Aerogel kann durch thermische Behandlung an Luft bei Temperaturen im Bereich von 100 bis 1000 °C hydrophiles oder zumindest teilweise hydrophiles Silika-Aerogel z.B. erhalten werden (siehe etwa EP 0810 975 B1).

Die im Rahmen dieser Erfindung verwendeten SiO₂-Aerogele haben eine spezifische Oberfläche von 100 - 1600 m²/g, bevorzugt von 500 - 950 g/m² (gemessen mittels BET-Verfahren nach DIN ISO 9277:2014), und bestehen bevorzugt aus SiO₂-Ketten, deren Primärpartikel ca. 1 - 10 nm groß sind, wobei der Abstand zwischen den einzelnen Ketten üblicherweise zwischen 10 - 100 nm beträgt. Die Porosität der SiO₂-Aerogele beträgt bevorzugt über 90 %. Die Poren sind zylinderförmig und haben einen Durchmesser von bevorzugt 2 nm bis 50 nm. Der Schmelzpunkt von SiO₂-Aerogelen liegt bei ca. 1200 °C.

In einer weiteren bevorzugten Ausführungsform bestehen die nanoporösen Silika-Partikel aus Silikagel. Silikagel gehört zur Gruppe der Xerogele und wird auch als Kieselgel oder Kieselsäuregel bezeichnet. Es besitzt eine große spezifische Oberfläche (ca. 150 - 900 m²/g, gemessen mittels BET-Verfahren nach DIN ISO 9277:2014). Üblicherweise liegt die Porosität bei über 50 % und die Porengröße variiert zwischen 1 und 10 nm.

In weiteren Ausführungsformen können die nanoporösen Silika-Partikel gefällte Kieselsäure umfassen bzw. aus dieser bestehen, wobei die gefällte Kieselsäure bevorzugt nach dem der Fachperson bekannten "Stöber-Verfahren" hergestellt werden kann (wie z.B. beschrieben in: Microporous and Mesoporous Materials, Volume 258, 2018, S. 205-2010: "Tailoring the size and microporosity of Stöber silica particles, Mircoprous and Mesoporous Materials").

In weiteren Ausführungsformen können die nanoporösen Silika-Partikel Reisschalenasche umfassen bzw. aus dieser bestehen. Durch geeignete thermische bzw. chemisch-thermische Behandlung können Partikel aus Reisschalenasche mit hohem SiO₂-Gehalt (mindestens 90 Gew.-%), hoher Nanoporosität und großer spezifischer Oberfläche (BET-Wert > 50 m²/g) erhalten werden (wie z.B. beschrieben in: KR 2013 0071451 A).

Bevorzugt weist der erfindungsgemäße Feuerleichtstein eine Kaltdruckfestigkeit von mindestens 0,5 MPa, bevorzugt mindestens 1 MPa, bestimmt gemäß DIN EN ISO 8895:2006, auf.

Bevorzugt weist der erfindungsgemäße Feuerleichtstein eine Wärmeleitfähigkeit von maximal 0,25 W/(m·K) bei einer Temperatur von 800 °C auf, wobei die Wärmeleitfähigkeit nach EN ISO 8894-1:2010 (Kreuzverfahren) bestimmt wird.

Ein weiterer Aspekt der Erfindung bezieht sich auf ein Verfahren zur Herstellung eines gebrannten Silika-Feuerleichtsteins, insbesondere eines gebrannten Silika-Feuerleichtsteins gemäß der vorliegenden Erfindung, wobei das Verfahren folgende Schritte in der angegebenen Reihenfolge umfasst:
a) Bereitstellung eines Schlickers umfassend Partikel eines ersten Silika-Rohstoffes, Partikel eines zweiten Silika-Rohstoffes und ein flüssiges Dispersionsmedium,
   ∘ wobei die Partikel des ersten Silika-Rohstoffes und die Partikel des zweiten Silika-Rohstoffes in dem flüssigen Dispersionsmedium dispergiert sind, und
   ∘ wobei der erste Silika-Rohstoff ein nicht nanoporöser Silika-Rohstoff ist, und
   ∘ wobei der zweite Silika-Rohstoff ein nanoporöser Silika-Rohstoff mit einer mittleren Porengröße im Bereich von 1 nm bis 100 nm ist;
b) Aufschäumen des Schlickers;
c) Unterziehen des aufgeschäumten Schlickers einem formgebenden Verfahren, um einen geformten Schaum zu erhalten;
d) Trocknen des geformten Schaums;
e) Brennen des getrockneten Schaums bei einer Temperatur von 400 bis 1100 °C, bevorzugt bei einer Temperatur von 600 bis 1100 °C, besonders bevorzugt bei einer Temperatur von 800 bis 1050 °C, um den gebrannten Silika-Feuerleichtstein zu erhalten.

Im Rahmen der vorliegenden Erfindung bezieht sich der Begriff "Schlicker" auf ein Gemisch von Feststoffen in einem flüssigen Dispersionsmedium.

Der Schlicker umfasst gemäß der vorliegenden Erfindung zumindest folgende Komponenten:
- Partikel eines ersten Silika-Rohstoffes,
- Partikel eines zweiten Silika-Rohstoffes, und
- ein flüssiges Dispersionsmedium.

Die Partikel des ersten Silika-Rohstoffes und die Partikel des zweiten Silika-Rohstoffes sind in dem flüssigen Dispersionsmedium dispergiert, wobei die Partikel des ersten Silika-Rohstoffes und die Partikel des zweiten Silika-Rohstoffes bevorzugt homogen dispergiert sind.

Im erfindungsgemäßen Verfahren wird der Brand bei einer Temperatur von 400 bis 1100 °C durchgeführt. Es hat sich herausgestellt, dass dieser Temperaturbereich essenziell ist, damit die Nanoporosität der Partikel des zweiten Silika-Rohstoffes während des Brandes erhalten bleibt. Insbesondere hat sich gezeigt, dass bei höheren Brenntemperaturen ein Porenwachstum stattfindet, was zu einem unerwünschten Anstieg der Wärmeleitfähigkeit im resultierenden Feuerleichtstein führt. Bevorzugt wird der Brand bei einer Temperatur von 600 bis 1100 °C durchgeführt. Besonders bevorzugt wird der Brand bei einer Temperatur von 800 bis 1050 °C durchgeführt.

Im erfindungsgemäßen Verfahren ist der erste Silika-Rohstoff ein nicht nanoporöser Silika-Rohstoff. Dadurch kann trotz der Anwesenheit des zweiten, nanoporösen, Silika-Rohstoffes ein Feuerleichtstein mit ausreichender Festigkeit erreicht werden. Bevorzugt weist der aus dem erfindungsgemäßen Verfahren resultierende Feuerleichtstein eine Kaltdruckfestigkeit von mindestens 0,5 MPa, besonders bevorzugt mindestens 1 MPa, auf (bestimmt mittels DIN EN ISO 8895:2006).

Bevorzugt beträgt die spezifische Oberfläche der Partikel des ersten Silika-Rohstoffes unter 50 m²/g, gemessen mittels BET-Verfahren nach DIN ISO 9277:2014. Die dadurch erreichte geringe Eigenporosität des ersten Silika-Rohstoffes erlaubt den Erhalt eines Feuerleichtsteins mit besonders hoher Festigkeit. Besonders bevorzugt weisen die Partikel des ersten Silika-Rohstoffes eine spezifische Oberfläche von unter 40 m²/g, bevorzugt unter 30 m²/g, bevorzugt unter 20 m²/g, gemessen mittels BET-Verfahren nach DIN ISO 9277:2014, auf.

Vorzugsweise ist der erste Silika-Rohstoff ausgewählt aus der Gruppe bestehend aus Quarz, Tridymit, Cristobalit, amorphem SiO₂ und Mischungen davon.

Der zweite Silika-Rohstoff ist ein nanoporöser Silika-Rohstoff mit einer mittleren Porengröße von 1 bis 100 nm. Die mittlere Porengröße des nanoporösen Silika-Rohstoffes kann mittels Rasterelektronenmikroskopie (REM) bestimmt werden. Die Messung kann bei einer Anregungsspannung von 10 - 15 kV, einem Probenstrom von 1 nA und unter Verwendung eines Sekundärelektronen-Detektors durchgeführt werden. Beispielsweise kann als Rasterelektronenmikroskop das Gerät JEOL JSM-7900F verwendet werden.

Eine mittlere Porengröße in diesem Bereich ist - wie oben beschrieben - vorteilhaft, um einen Feuerleichtstein mit besonders niedrigen Wärmeleitfähigkeiten zu erhalten. Bevorzugt liegt die mittlere Porengröße des zweiten Silika-Rohstoffes im Bereich von 1 nm bis 80 nm, noch mehr bevorzugt im Bereich von 1 nm bis 70 nm, noch mehr bevorzugt im Bereich von 1 nm bis 60 nm und noch mehr bevorzugt im Bereich von 1 nm bis 50 nm.

Bevorzugt weisen die Partikel des zweiten Silika-Rohstoffes eine spezifische Oberfläche von mindestens 50 m²/g, gemessen mittels BET-Verfahren nach DIN ISO 9277:2014, auf.

Eine BET-Oberfläche von mindestens 50 m²/g begünstigt eine hohe Eigenporosität der Partikel des zweiten Silika-Rohstoffes, was dazu führt, dass der mit dem erfindungsgemäßen Verfahren erhaltene Feuerleichtstein - wie oben beschrieben - besonders vorteilhafte Wärmedämmeigenschaften aufweist. Besonders bevorzugt beträgt die BET-Oberfläche der nanoporösen Silika-Partikel mindestens 100 m²/g, besonders bevorzugt mindestens 500 m²/g, gemessen mittels BET-Verfahren nach DIN ISO 9277:2014.

Bevorzugt umfasst der zweite Silika-Rohstoff Silika-Aerogel, Silika-Xerogel, Silika-Kryogel und/oder Mischungen davon. Besonders bevorzugt besteht der nanoporöse Silika-Rohstoff aus Silika-Aerogel, Silika-Xerogel, Silika-Kryogel und/oder Mischungen davon. Diese Materialien weisen die oben beschriebenen Vorteile auf.

Es wurde gefunden, dass mit dem erfindungsgemäßen Verfahren Silika-Feuerleichtsteine mit besonders vorteilhaften Wärmedämmeigenschaften erhalten werden, wenn der nanoporöse Silika-Rohstoff aus einem hydrophilen Silika-Aerogel besteht. Der Einsatz von hydrophilem Silika-Aerogel ist bei Verwendung eines polaren Dispersionsmediums, wie z.B. Wasser oder einer wässrigen alkoholischen Mischung, vorteilhaft, da dadurch eine besonders stabile Dispersion und nach dem Aufschäumen des Schlickers ein besonders stabiler Schaum erhalten wird.

In einer weiteren bevorzugten Ausführungsform besteht der nanoporöse Silika-Rohstoff aus Silikagel, welches zur Gruppe der Xerogele zählt. In weiteren Ausführungsformen kann der nanoporöse Silika-Rohstoff gefällte Kieselsäure umfassen bzw. aus dieser bestehen, wobei die gefällte Kieselsäure insbesondere nach dem der Fachperson bekannten "Stöber-Verfahren" hergestellt werden kann (wie z.B. beschrieben in: Microporous and Mesoporous Materials, Volume 258, 2018, S. 205-2010: "Tailoring the size and microporosity of Stöber silica particles, Mircoprous and Mesoporous Materials").

In weiteren Ausführungsformen kann der nanoporöse Silika-Rohstoff Reisschalenasche umfassen bzw. aus dieser bestehen. Durch geeignete thermische bzw. chemisch-thermische Behandlung können Partikel aus Reisschalenasche mit hohem SiO₂-Gehalt (mindestens 90 Gew.-%), hoher Nanoporosität und großer spezifischer Oberfläche (BET-Wert > 50 m²/g) erhalten werden (wie z.B. beschrieben in: KR 2013 0071451 A).

Im erfindungsgemäßen Verfahren liegen der erste und der zweite Silika-Rohstoff in Form von Partikeln im Schlicker vor. Bevorzugt liegen der erste und/oder der zweite Silika-Rohstoff als Granulat vor, dessen Korngrößenverteilung einen d50-Wert von 0,3 bis 25 µm, bevorzugt von 1,0 bis 15 µm, bestimmt durch eine Korngrößenanalyse mittels Laserbeugung gemäß ISO 13320-1:2020, aufweist.

Bevorzugt liegen der erste und der zweite Silika-Rohstoff in dieser Korngrößenverteilung vor.

Der "d50-Wert" gibt bekanntermaßen eine Partikelgröße (auch "Korngröße") für eine Partikelmischung an, bei der 50 % der Mischung eine Partikelgröße entsprechend dem d50-Wert und darunter und 50 % dieser Partikelmischung eine Partikelgröße oberhalb des d50-Wertes aufweisen.

Ein d50-Wert von 0,3 bis 25 µm, bevorzugt von 1,0 bis 15 µm, für den ersten und/oder zweiten Silika-Rohstoff ist vorteilhaft, um im erfindungsgemäßen Verfahren nach dem Aufschäumen des Schlickers einen stabilen Schaum mit homogener Porenverteilung und vorteilhaften Porengrößen zu erhalten, insbesondere Poren mit einer mittleren Porengröße von mindestens 1 µm, bevorzugt mit einer mittleren Porengröße im Bereich von 1 µm bis 1 mm, besonders bevorzugt 20 µm bis 200 µm.

In einer weiteren Ausführungsform kann der zweite Silika-Rohstoff zumindest anteilig in einer Korngröße von bis zu 3 mm, bestimmt mittels Siebanalyse (gemäß DIN EN 1402-3), eingesetzt werden. Diese gröbere Korngröße ermöglicht es, die mechanischen Eigenschaften, insbesondere die Festigkeit, des resultierenden Feuerleichtsteins zu verbessern.

Bevorzugt liegt der Gesamtgehalt an erstem und zweitem Silika-Rohstoff (Summe des ersten und zweiten Silika-Rohstoffes), bezogen auf die Gesamtmasse des Schlickers, zwischen 33 und 79 Gew.-%, besonders bevorzugt zwischen 35 und 75 Gew.-%.

Eine bevorzugte Ausführungsform sieht vor, dass der erste Silika-Rohstoff zu 90 bis 35 Vol.-%, bevorzugt zu 85 bis 45 Vol.-%, und der zweite Silika-Rohstoff zu 10 bis 65 Vol.-%, bevorzugt zu 15 bis 55 Vol.-%, bezogen auf das Gesamtvolumen von erstem und zweitem Silika-Rohstoff, enthalten ist. Durch dieses Volumenverhältnis wird ein Feuerleichtstein mit besonders guten Wärmedämmeigenschaften erhalten.

Im erfindungsgemäßen Verfahren kann das flüssige Dispersionsmedium ausgewählt sein aus der Gruppe bestehend aus Wasser und wässrigen alkoholischen Mischungen, insbesondere aus Mischungen von Wasser mit Ethanol, Methanol und/oder Isopropanol. Insbesondere bevorzugt ist das Dispersionsmedium Wasser. Der Gehalt des flüssigen Dispersionsmediums bezogen auf die Gesamtmasse des Schlickers beträgt bevorzugt 20 bis 50 Gew.-%.

Bevorzugt umfasst der Schlicker mindestens ein Dispergiermittel, das bevorzugt aus der Gruppe bestehend aus Polyacrylaten, Polycarboxylaten, deren Mischungen, Ligninsulfonaten, Oxalaten, Citraten, insbesondere Ammonium Polyacrylate, ausgewählt ist. Für den Fall, dass ein Dispergiermittel im Schlicker beinhaltet ist, ist dieses bevorzugt zu 0,1 bis 5,0 Gew.-%, besonders bevorzugt zu 0,3 bis 0,6 Gew.-%, bezogen auf die Gesamtmasse des Schlickers, enthalten.

Im erfindungsgemäßen Verfahren wird der Schlicker aufgeschäumt. Dabei wird ein flüssiger Schaum erzeugt. Zur Unterstützung der Aufschäumung kann zudem mindestens eine oberflächenaktive Substanz (ein sogenanntes Schäumungsmittel) auf Basis von Tensiden und/oder Proteinen hinzugegeben werden. Bevorzugt ist dieses Schäumungsmittel zu 0,5 bis 10 Gew.-%, bevorzugt zu 1,0 bis 5,0 Gew.-%, bezogen auf die Gesamtmasse des Schlickers, enthalten.

Üblicherweise wird bei Schäumungsverfahren vor und/oder während des Aufschäumens mindestens ein anorganisches Bindemittel wie z.B. Calciumoxid (CaO) hinzugegeben, um den Schaum zu stabilisieren.

In der vorliegenden Erfindung wurde überraschenderweise gefunden, dass die Partikel des nanoporösen Silika-Rohstoffs, wie z.B. hydrophiles oder zumindest teilweise hydrophiles Silika-Aerogel, die Schaumstruktur stabilisieren, und zwar sowohl nach dem formgebenden Verfahren als auch während der Entformung, der anschließenden Trocknung und beim Brennen des Feuerleichtsteines. Der Zusatz eines CaO-haltigen Bindemittels zur zusätzlichen Stabilisierung der Schaumstruktur ist daher nicht zwingend erforderlich. Dadurch kann mit dem erfindungsgemäßen Verfahren ein Feuerleichtstein mit besonders hoher Reinheit (also besonders hohem Silika-Gehalt) erhalten werden.

Gemäß einer Ausführungsform des erfindungsgemäßen Verfahrens kann jedoch vorgesehen sein, dass vor und/oder während des Aufschäumens mindestens ein anorganisches Bindemittel hinzugegeben wird, das bevorzugt ausgewählt ist aus der Gruppe bestehend aus CaO-enthaltenden hydraulischen Bindemitteln, beispielsweise Calciumaluminatzemente, Portlandzemente, und/oder CaO-haltigen Bindemitteln, z. B. Kalkmilch, Gips, und/oder Silikasole (Kieselsole). Wenn ein solches anorganisches Bindemittel eingesetzt wird, wird dieses bevorzugt in einem Gewichtsanteil von 1,0 bis 12,5 Gew.-%, bevorzugt von 1,0 bis 10 Gew.-%, besonders bevorzugt von 1,5 bis 8,0 Gew.-%, ganz besonders bevorzugt von 2,5 bis 6,0 Gew.-%, bezogen auf die Gesamtmasse des Schlickers, eingesetzt.

Vorzugsweise kann dem Schlicker ebenso mindestens ein organisches Bindemittel zugesetzt werden, das bevorzugt ausgewählt ist aus der Gruppe bestehend aus Polyvinylalkoholen, Polyethylenglykolen, Polyvinylbutyral, Polyvinylpyrrolidonen, Acrylcopolymeren und Mischungen hiervon. Besonders bevorzugt sind Polyvinylalkohole. Hierbei kann es vorgesehen sein, dass das mindestens eine organische Bindemittel zu 0,1 bis 2,0 Gew.-%, bevorzugt zu 0,2 bis 0,8 Gew.-%, bezogen auf die Gesamtmasse des Schlickers, enthalten ist.

Vorzugsweise wird die Dichte des Schlickers vor dem Aufschäumen auf 1,3 bis 1,7 g/cm³ eingestellt.

Bevorzugt erfolgt das Aufschäumen des Schlickers im erfindungsgemäßen Verfahren mechanisch, z. B. mit Hilfe eines entsprechenden Geräts (zum Beispiel einem "Dissolver"). Insbesondere erfolgt das Aufschäumen durch Erzeugung einer wechselnden turbulenten und laminaren Strömung im Schlicker. Alternativ kann das Aufschäumen auch durch Mischen mit einem separat hergestellten Schaum erfolgen.

Gemäß einer bevorzugten Ausführungsform enthält der aufgeschäumte Schlicker 33,0 bis 79,0 Gew.-%, bevorzugt 35,0 bis 75,0 Gew.-%, des ersten und zweiten Silika-Rohstoffes, 0,1 bis 5,0 Gew.-%, bevorzugt 0,3 bis 0,6 Gew.-% des mindestens einen Dispergiermittels, 0 bis 12,5 Gew.-%, bevorzugt 1,5 bis 8,0 Gew.-% des mindestens einen anorganischen Bindemittels, 0,1 bis 2,0 Gew.-%, bevorzugt 0,2 bis 0,8 Gew.-% des mindestens einen organischen Bindemittels und 20,0 bis 50,0 Gew.-% des mindestens einen Dispersionsmediums.

Gemäß einer bevorzugten Ausführungsform ist vorgesehen, dass das Aufschäumen des Schlickers mit einem Schäumungsfaktor von 150 bis 200 % erfolgt, wobei der Schäumungsfaktor dem Verhältnis zwischen dem Volumen des flüssigen Schaums nach und dem Volumen des erzeugten Schlickers vor dem Aufschäumen entspricht.

Im erfindungsgemäßen Verfahren wird der aufgeschäumte Schlicker einem formgebenden Verfahren unterzogen. Das formgebende Verfahren kann durch Gießen des aufgeschäumten Schlickers in eine Form erfolgen. Auf diese Weise wird ein geformter Schaum (Formling) erhalten. Nach dem formgebenden Schritt ist es bevorzugt, dass der geformte Schaum nach dem formgebenden Verfahren abgebunden wird, dabei erstarrt und vor dem Trocknen der Form entnommen wird. Hierbei kann die Dichte des getrockneten Schaums 0,4 bis 0,8 g/cm³ betragen.

Falls ein anorganisches Bindemittel vor oder während des Aufschäumens zugegeben wurde, kann während des Trocknens des geformten Schaumes ein Abbinden erfolgen. In Abhängigkeit von der Größe des Formlings kann das Abbinden über einen Zeitraum von 1 bis 40 h erfolgen. Bevorzugt erfolgt die Trocknung bei einer relativen Luftfeuchtigkeit von 30 bis 70 % und/oder bei einer Temperatur von 25 bis 80 °C, bevorzugt von 30 bis 60 °C.

Der getrocknete Schaum wird bei Temperaturen von 400 bis 1100 °C, bevorzugt von 600 bis 1100 °C, besonders bevorzugt von 800 bis 1050 °C gebrannt. Bevorzugt erfolgt das Brennen unter oxidierender Ofenatmosphäre. Nach dem Brand kann der erfindungsgemäße Silika-Feuerleichtstein mechanisch bearbeitet werden, z. B. durch Schneiden, Bohren, Schleifen oder Fräsen, ohne dass es zu einem Bruch des Steins kommt.

Die vorliegende Erfindung betrifft zudem Verwendungsmöglichkeiten des erfindungsgemäßen gebrannten Silika-Feuerleichtsteins, sowie des mit dem erfindungsgemäßen Verfahren erhaltenen gebrannten Silika-Feuerleichtsteins. Dieser findet bevorzugt als thermisches Isolationsmaterial, insbesondere zur Wärmedämmung eines Glasschmelzwannengewölbes, Anwendung.

Der erfindungsgemäße gebrannte Silika-Feuerleichtstein kann im Normalsteinformat bereitgestellt werden, beispielsweise als Rechteckstein im Format: 230 x 114 x 64 mm. Bei der Verwendung von nicht vermörtelten Feuerleichtsteinen im Normalsteinformat zur Wärmedämmung gewölbter Flächen bilden sich in den Stoßfugen keilförmige Fugen und Hohlräume aus, die als Kältebrücken wirken. Daher kann der erfindungsgemäße gebrannte Silika-Feuerleichtstein auch mit vom Normalsteinformat abweichenden, insbesondere mit größeren und/oder komplexeren Abmessungen hergestellt werden, wie z.B. eine der zu isolierenden Gewölbekontur angepassten Geometrie, um zum einen Kältebrücken zu vermeiden und zum anderen die Gewölbeisolierung mit weniger Zeitaufwand eindecken zu können. Der erfindungsgemäße gebrannte Silika-Feuerleichtstein kann derart ausgebildet sein, dass mindestens eine Oberfläche des Silika-Feuerleichtsteins konkav oder konvex ausgebildet ist.

Die vorliegende Erfindung wird anhand der nachfolgenden beispielhaften Ausführungen näher beschrieben, ohne den Schutzbereich einzuschränken.

Es wurde ein wässriger Schlicker bereitgestellt, welcher, bezogen auf die Gesamtmasse des Schlickers, 35 bis 75 Gew.-%, des ersten und zweiten Silika-Rohstoffes enthielt.

Als erster Silika-Rohstoff wurden Partikel aus Quarzgut ("fused silica") eingesetzt. Der Schlicker enthielt 15 bis 55 Vol.-% hydrophiles, partikelförmiges Silika-Aerogel (zweiter Silika-Rohstoff), bezogen auf das Gesamtvolumen von erstem und zweitem Silika-Rohstoff. Der Schlicker wurde in bekannter Weise mithilfe mindestens eines handelsüblichen, organischen Dispergiermittels und optional weiterer organischer Zusatzstoffe durch Rühren homogenisiert und mit Hilfe eines handelsüblichen Schäumungsmittels mechanisch zu einer gießfähigen Konsistenz aufgeschäumt.

Die Rohdichte des erfindungsgemäßen Silika-Feuerleichtsteines wurde dabei durch das Volumenverhältnis von Schlicker und fertig aufbereitetem, gießfähigem Schaum eingestellt.

Das formgebende Verfahren wurde durch Gießen des aufgeschäumten Schlickers in eine Form durchgeführt. Nach dem formgebenden Schritt wurde der geformte Schaum getrocknet. Die Trocknung erfolgte bei einer relativen Luftfeuchtigkeit von 30 bis 70 % und bei einer Temperatur von 25 bis 80 °C.

Die zugesetzten organischen Bestandteile verflüchtigten sich beim späteren, unter oxidierender Atmosphäre durchgeführten Brand des Feuerleichtsteines, wobei der Brand bei einer Temperatur von 400 bis 1100 °C, vorzugsweise bei 800 bis 1050 °C, durchgeführt wurde, um wie oben beschrieben die gewünschte Nanoporosität des zweiten Silika-Rohstoffes beizubehalten.

Die folgenden konkreten Beispiele werden zur Veranschaulichung angegeben.

Tabelle 1 zeigt die gemäß EN ISO 8894-1:2010 (Kreuzverfahren) bei Temperaturen von 400 °C und 800 °C ermittelten Wärmeleitfähigkeiten (WLF) von erfindungsgemäßen, gebrannten Silika-Feuerleichtsteinen (Beispiele III und IV) im Vergleich zu konventionell hergestellten (hydraulisch gepressten) gebrannten Silika-Feuerleichtsteinen (Beispiel I) sowie zu gebrannten Silika-Feuerleichtsteinen, die wie die erfindungsgemäßen Steine, allerdings ohne Zugabe des zweiten Silika-Rohstoffes (also ohne Zugabe von Partikeln eines nanoporösen Silika-Rohstoffes) hergestellt wurden (Beispiel II). Die Temperatur für den Brand der in den Beispielen I bis V aufgeführten gebrannten Silika-Feuerleichtsteinen betrug jeweils 1000 °C. Der Anteil an Silika-Aerogel wird in Tabelle 1 jeweils in Vol.-% bezogen auf das Gesamtvolumen an erstem und zweitem Silika-Rohstoff angegeben. Die Rohdichte wurde nach DIN EN 1094-4:1995 und die Kaltdruckfestigkeit (KDF) nach DIN EN ISO 8895:2006 bestimmt. Der SiO₂-Gehalt wurde mittels DIN EN ISO 12677 bestimmt. Die mit SiO₂-Aerogelzusatz mechanisch geschäumten Silika-Feuerleichtsteine (Beispiele III und IV) sind jeweils ohne Zusatz eines CaO-haltigen Bindemittels hergestellt worden.

**Tabelle 1**

| Beispiel | I | II | III | IV |
|---|---|---|---|---|
| Herstellung | Konventionell, hydraulisch gepresst | Mechanisch geschäumt | Mechanisch geschäumt | Mechanisch geschäumt |
| Anteil SiO₂-Aerogel [Vol.-%] | --- | --- | 20 | 48 |
| Rohdichte [g/cm³] | 0,63 | 0,46 | 0,59 | 0,48 |
| KDF [MPa] | 0,8 | 1,2 | 1,4 | 1,1 |
| SiO₂-Gehalt [Gew.-%] | 92,2 | 90,1 | > 96,1 | > 96,1 |
| WLF bei 400 °C [W/(m·K)] | 0,27 | 0,26 | 0,18 | 0,14 |
| WLF bei 800 °C [W/(m·K)] | 0,36 | 0,33 | 0,23 | 0,19 |

Wie aus den Werten in Tabelle 1 ersichtlich, zeigen die erfindungsgemäßen, SiO₂-Aerogel enthaltenden gebrannten Silika-Feuerleichtsteine (Beispiele III und IV) im Vergleich zu den konventionellen Steinen (Beispiel I) sowohl bei vergleichbaren als auch höheren Rohdichtewerten eine deutlich niedrigere Wärmeleitfähigkeit. Bei den mechanisch geschäumten Steinen (Beispiele II - IV) ist deutlich zu erkennen, dass bereits ein geringer Zusatz an nanoporösem hydrophilem SiO₂-Aerogel eine deutliche Verbesserung im Wärmedämmvermögen bzw. Verringerung der Wärmeleitfähigkeit bewirkt.

## Patentansprüche

1. Gebrannter Silika-Feuerleichtstein aufweisend:
1.1 eine Rohdichte von maximal 0,65 g/cm³; und
1.2 eine mikroporöse Struktur, die mikroporöse Struktur umfassend:
1.2.1 ein Gerüst aus miteinander verbundenen, nicht nanoporösen Partikeln einer Silika-Grundkomponente, und
1.2.2 Poren mit einer mittleren Porengröße von mindestens 1 µm; **dadurch gekennzeichnet, dass**
1.3 nanoporöse Silika-Partikel mit einer mittleren Porengröße im Bereich von 1 nm bis 100 nm in das Gerüst der miteinander verbundenen, nicht nanoporösen Partikel der Silika-Grundkomponente eingebettet sind, wobei die mittlere Porengröße mittels Rasterelektronenmikroskopie bestimmt wird.

2. Gebrannter Silika-Feuerleichtstein nach Anspruch 1, wobei die nicht nanoporösen Partikel der Silika-Grundkomponente eine spezifische Oberfläche von unter 50 m²/g, gemessen mittels BET-Verfahren nach DIN ISO 9277:2014, aufweisen.

3. Gebrannter Silika-Feuerleichtstein nach Anspruch 1 oder 2, wobei die nanoporösen Silika-Partikel eine spezifische Oberfläche von mindestens 50 m²/g, bevorzugt mindestens 100 m²/g, besonders bevorzugt mindestens 500 m²/g, gemessen mittels BET-Verfahren nach DIN ISO 9277:2014, aufweisen.

4. Gebrannter Silika-Feuerleichtstein nach einem der vorhergehenden Ansprüche, wobei die nanoporösen Silika-Partikel in einem Volumenanteil von 10 bis 65 Vol.-%, bezogen auf das Gesamtvolumen der nicht nanoporösen Partikel der Silika-Grundkomponente und der nanoporösen Silika-Partikel, vorliegen.

5. Gebrannter Silika-Feuerleichtstein nach einem der vorhergehenden Ansprüche, wobei die nanoporösen Silika-Partikel ausgewählt sind aus der Gruppe bestehend aus: Silika-Aerogel, Silika-Xerogel, Silika-Kryogel, gefällter Kieselsäure, Reisschalenasche und Mischungen davon.

6. Gebrannter Silika-Feuerleichtstein gemäß einem der vorhergehenden Ansprüche, wobei der Feuerleichtstein eine Wärmeleitfähigkeit von maximal 0,25 W/(m·K) bei einer Temperatur von 800 °C, bestimmt nach EN ISO 8894-1:2010, aufweist.

7. Verfahren zur Herstellung eines gebrannten Silika-Feuerleichtsteins, umfassend folgende Schritte:
a) Bereitstellung eines Schlickers umfassend Partikel eines ersten Silika-Rohstoffes, Partikel eines zweiten Silika-Rohstoffes und ein flüssiges Dispersionsmedium,
∘ wobei die Partikel des ersten Silika-Rohstoffes und die Partikel des zweiten Silika-Rohstoffes in dem flüssigen Dispersionsmedium dispergiert sind, und
∘ wobei der erste Silika-Rohstoff ein nicht nanoporöser Silika-Rohstoff ist, und
∘ wobei der zweite Silika-Rohstoff ein nanoporöser Silika-Rohstoff mit einer mittleren Porengröße im Bereich von 1 nm bis 100 nm ist;
b) Aufschäumen des Schlickers;
c) Unterziehen des aufgeschäumten Schlickers einem formgebenden Verfahren, um einen geformten Schaum zu erhalten;
d) Trocknen des geformten Schaums;
e) Brennen des getrockneten Schaums bei einer Temperatur von 400 bis 1100 °C, bevorzugt bei einer Temperatur von 800 bis 1050 °C, um den gebrannten Silika-Feuerleichtstein zu erhalten.

8. Verfahren nach Anspruch 7, wobei die Partikel des zweiten Silika-Rohstoffes eine spezifische Oberfläche von mindestens 50 m²/g, bevorzugt mindestens 100 m²/g, besonders bevorzugt mindestens 500 m²/g, gemessen mittels BET-Verfahren nach DIN ISO 9277:2014, aufweisen.

9. Verfahren nach Anspruch 7 oder 8, wobei der erste Silika-Rohstoff ausgewählt ist aus der Gruppe bestehend aus Quarz, Tridymit, Cristobalit, amorphem SiO₂ und Mischungen davon.

10. Verfahren nach einem der Ansprüche 7 bis 9, wobei der zweite Silika-Rohstoff ausgewählt ist aus der Gruppe bestehend aus Silika-Aerogel, Silika-Xerogel, Silika-Kryogel, gefällter Kieselsäure, Reisschalenasche und Mischungen davon.

11. Verfahren nach einem der Ansprüche 7 bis 10, wobei die Partikel des ersten und/oder des zweiten Silika-Rohstoffs eine Korngrößenverteilung mit einem d50-Wert von 0,3 bis 25 µm aufweisen, bestimmt mittels Laserbeugung gemäß ISO 13320-1:2020.

12. Verfahren nach einem der Ansprüche 7 bis 11, wobei der Gesamtgehalt an erstem und zweitem Silika-Rohstoff 33 bis 79 Gew.-%, bevorzugt 35 bis 75 Gew.-%, bezogen auf die Gesamtmasse des Schlickers, beträgt.

13. Verfahren nach einem der Ansprüche 7 bis 12, wobei der erste Silika-Rohstoff zu 90 bis 35 Vol.-%, bevorzugt zu 85 bis 45 Vol.-%, und der zweite Silika-Rohstoff zu 10 bis 65 Vol.-%, bevorzugt zu 15 bis 55 Vol.-%, bezogen auf das Gesamtvolumen von erstem und zweiten Silika-Rohstoff im Schlicker, enthalten ist.

14. Verfahren nach einem der Ansprüche 7 bis 13, wobei vor und/oder während des Aufschäumens kein anorganisches Bindemittel, insbesondere kein Calciumoxid (CaO), zugegeben wird.

15. Verwendung des gebrannten Silika-Feuerleichtsteins gemäß einem der Ansprüche 1 bis 6 als thermisches Isolationsmaterial, bevorzugt in einem Glasschmelzwannengewölbe.

## Claims

1. A fired lightweight silica refractory brick having:
1.1 a bulk density of no greater than 0.65 g/cm³; and
1.2 a microporous structure, the microporous structure comprising:
1.2.1 a framework of non-nanoporous particles of a base silica component connected to each other, and
1.2.2 pores having a mean pore size of at least 1 µm; **characterized in that**
1.3 nanoporous silica particles having a mean pore size in the range from 1 nm to 100 nm are embedded in the framework of non-nanoporous particles of the base silica component connected to each other, wherein the mean pore size is determined by scanning electron microscopy.

2. The fired lightweight silica refractory brick according to claim 1, wherein the non-nanoporous particles of the base silica component have a specific surface area of less than 50 m²/g, as measured by means of the BET method according to DIN ISO 9277:2014.

3. The fired lightweight silica refractory brick according to claim 1 or 2, wherein the nanoporous silica particles have a specific surface area of at least 50 m²/g, preferably at least 100 m²/g, particularly preferably at least 500 m²/g, as measured by means of the BET method according to DIN ISO 9277:2014.

4. The fired lightweight silica refractory brick according to any one of the preceding claims, wherein the nanoporous silica particles are present at a volume proportion of 10 to 65 vol% relative to the total volume of the non-nanoporous particles of the base silica component and the nanoporous silica particles.

5. The fired lightweight silica refractory brick according to any one of the preceding claims, wherein the nanoporous silica particles are selected from the group consisting of: silica aerogel, silica xerogel, silica cryogel, precipitated silica, rice husk ash, and mixtures thereof.

6. The fired lightweight refractory brick according to any one of the preceding claims, wherein the lightweight refractory brick has a thermal conductivity of no greater than 0.25 W/(m·K) at a temperature of 800 °C, as determined according to DIN EN 8894-1:2010.

7. A method for manufacturing a fired lightweight silica refractory brick comprising the following steps:
a) providing a slurry comprising particles of a first silica raw material, particles of a second silica raw material, and a liquid dispersion medium,
∘ wherein the particles of the first silica raw material and the particles of the second silica raw material are dispersed in the liquid dispersion medium, and
∘ wherein the first silica raw material is a non-nanoporous silica raw material, and
∘ the second silica raw material is a nanoporous silica raw material having a mean pore size in the range from 1 to 100 nm;
b) foaming the slurry;
c) subjecting the foamed slurry to a forming process in order to obtain a formed foam;
d) drying the formed foam;
e) firing the dried foam at a temperature of 400 to 1100 °C, preferably at a temperature of 800 to 1050 °C, in order to obtain the fired lightweight silica refractory brick.

8. The method according to claim 7, wherein the particles of the second silica raw material have a specific surface area of at least 50 m²/g, preferably at least 100 m²/g, particularly preferably at least 500 m²/g, as measured by means of the BET method according to DIN ISO 9277:2014.

9. The method according to claim 7 or 8, wherein the first silica raw material is selected from the group consisting of quartz, tridymite, cristobalite, amorphous SiO₂, and mixtures thereof.

10. The method according to any one of claims 7 to 9, wherein the second silica raw material is selected from the group consisting of silica aerogel, silica xerogel, silica cryogel, precipitated silica, rice husk ash, and mixtures thereof.

11. The method according to any one of claims 7 to 10, wherein the particles of the first and/or the second silica raw material have a grain size distribution having a d50 value of 0.3 to 25 µm as determined by means of laser diffraction according to ISO 13320-1:2020.

12. The method according to any one of claims 7 to 11, wherein the total content of the first and second silica raw material is 33 to 79 wt%, preferably 35 to 75 wt%, relative to the total mass of the slurry.

13. The method according to any one of claims 7 to 12, wherein the first silica raw material is present at 90 to 35 vol%, preferably at 85 to 45 vol%, and the second silica raw material is present at 10 to 65 vol%, preferably at 15 to 55 vol%, relative to the total volume of the first and second silica raw material in the slurry.

14. The method according to any one of claims 7 to 13, wherein no inorganic binding agent, particularly no calcium oxide (CaO), is added prior to and/or during foaming.

15. A use of the fired lightweight silica refractory brick according to any one of claims 1 to 6 as a thermal insulation material, preferably in a glass furnace crown.
Provided herein is a fired silica insulating refractory brick having a bulk density of at most 0.65 g/cm³ and a microporous structure, the microporous structure comprising a framework of interconnected, non-nanoporous particles of a silica base component, and pores having an average pore size of at least 1 µm, wherein nanoporous silica particles having an average pore size in the range of 1 nm to 100 nm are embedded in the framework of the interconnected, non-nanoporous particles of the silica base component.

## Revendications

1. Brique réfractaire isolante à base de silice cuite présentant:
1.1 une masse volumique apparente d'au maximum 0,65 g/cm³; et
1.2 une structure microporeuse, la structure microporeuse comprenant:
1.2.1 une ossature constituée de particules interconnectées, non nanoporeuses, d'un composant de base à base de silice, et
1.2.2 des pores présentant une taille moyenne des pores d'au moins 1 µm; **caractérisée en ce que**
1.3 des particules de silice nanoporeuses présentant une taille moyenne des pores comprise entre 1 nm et 100 nm sont incorporées dans l'ossature des particules interconnectées, non nanoporeuses, du composant de base à base de silice, la taille moyenne des pores étant déterminée par microscopie électronique à balayage.

2. Brique réfractaire isolante à base de silice cuite selon la revendication 1, dans laquelle les particules non nanoporeuses du composant de base à base de silice présentent une surface spécifique inférieure à 50 m²/g, mesurée par la méthode BET selon la norme DIN ISO 9277:2014.

3. Brique réfractaire isolante à base de silice cuite selon la revendication 1 ou 2, dans laquelle les particules de silice nanoporeuses présentent une surface spécifique d'au moins 50 m²/g, de préférence d'au moins 100 m²/g, de manière particulièrement préférée d'au moins 500 m²/g, mesurée par la méthode BET selon la norme DIN ISO 9277:2014.

4. Brique réfractaire isolante à base de silice cuite selon l'une quelconque des revendications précédentes, dans laquelle les particules de silice nanoporeuses sont présentes dans une proportion volumique de 10 à 65 % en volume, rapportée au volume total des particules non nanoporeuses du composant de base à base de silice et des particules de silice nanoporeuses.

5. Brique réfractaire isolante à base de silice cuite selon l'une quelconque des revendications précédentes, dans laquelle les particules de silice nanoporeuses sont choisies dans le groupe constitué de: aérogel de silice, xérogel de silice, cryogel de silice, silice précipitée, cendre de balle de riz et leurs mélanges.

6. Brique réfractaire isolante à base de silice cuite selon l'une quelconque des revendications précédentes, dans laquelle la brique réfractaire isolante présente une conductivité thermique d'au maximum 0,25 W/(m·K) à une température de 800 °C, déterminée selon la norme EN ISO 8894-1:2010.

7. Procédé de fabrication d'une brique réfractaire isolante à base de silice cuite, comprenant les étapes suivantes:
a) mise à disposition d'une barbotine comprenant des particules d'une première matière première à base de silice, des particules d'une deuxième matière première à base de silice et un milieu de dispersion liquide,
∘ les particules de la première matière première à base de silice et les particules de la deuxième matière première à base de silice étant dispersées dans le milieu de dispersion liquide, et
∘ la première matière première à base de silice étant une matière première à base de silice non nanoporeuse, et
∘ la deuxième matière première à base de silice étant une matière première à base de silice nanoporeuse présentant une taille moyenne des pores comprise entre 1 nm et 100 nm;
b) Moussage de la barbotine;
c) Soumission de la barbotine moussée à un procédé de mise en forme afin d'obtenir une mousse mise en forme;
d) Séchage de la mousse mise en forme;
e) Cuisson de la mousse séchée à une température de 400 à 1100 °C, de préférence à une température de 800 à 1050 °C, afin d'obtenir la brique réfractaire isolante à base de silice cuite.

8. Procédé selon la revendication 7, dans lequel les particules de la deuxième matière première à base de silice présentent une surface spécifique d'au moins 50 m²/g, de préférence d'au moins 100 m²/g, de manière particulièrement préférée d'au moins 500 m²/g, mesurée par la méthode BET selon la norme DIN ISO 9277:2014.

9. Procédé selon la revendication 7 ou 8, dans lequel la première matière première à base de silice est choisie dans le groupe constitué de quartz, tridymite, cristobalite, SiO₂ amorphe et leurs mélanges.

10. Procédé selon l'une quelconque des revendications 7 à 9, dans lequel la deuxième matière première à base de silice est choisie dans le groupe constitué de: aérogel de silice, xérogel de silice, cryogel de silice, silice précipitée, cendre de balle de riz et leurs mélanges.

11. Procédé selon l'une quelconque des revendications 7 à 10, dans lequel les particules de la première et/ou de la deuxième matière première à base de silice présentent une distribution granulométrique ayant une valeur d50 de 0,3 à 25 µm, déterminée par diffraction laser conformément à la norme ISO 13320-1:2020.

12. Procédé selon l'une quelconque des revendications 7 à 11, dans lequel la teneur totale en première et deuxième matières premières à base de silice est de 33 à 79 % en poids, de préférence de 35 à 75 % en poids, rapportée à la masse totale de la barbotine.

13. Procédé selon l'une quelconque des revendications 7 à 12, dans lequel la première matière première à base de silice est présente à raison de 90 à 35 % en volume, de préférence de 85 à 45 % en volume, et la deuxième matière première à base de silice est présente à raison de 10 à 65 % en volume, de préférence de 15 à 55 % en volume, rapportés au volume total de la première et de la deuxième matières premières à base de silice dans la barbotine.

14. Procédé selon l'une quelconque des revendications 7 à 13, dans lequel aucun liant inorganique, en particulier aucun oxyde de calcium (CaO), n'est ajouté avant et/ou pendant le moussage.

15. Utilisation de la brique réfractaire isolante à base de silice cuite selon l'une quelconque des revendications 1 à 6 en tant que matériau d'isolation thermique, de préférence dans la voûte d'un bassin de fusion du verre.
